(19)

Europäisches
Patentamt

European
Patent Office

Office européen
des brevets

(11)     **EP 4 564 860 A1**

(12)     **EUROPEAN PATENT APPLICATION**
published in accordance with Art. 153(4) EPC

(43) Date of publication:
**04.06.2025 Bulletin 2025/23**

(21) Application number: **22955387.0**

(22) Date of filing: **19.08.2022**

(51) International Patent Classification (IPC):
**H04W 4/38** (2018.01)     **H04W 4/029** (2018.01)
**G01S 19/45** (2010.01)

(52) Cooperative Patent Classification (CPC):
**H04W 4/029; G01J 1/0242; G01J 1/4204;
G01J 1/4228; G01S 5/16; G01S 19/45;
G01S 19/485; H04W 4/38;** G01S 19/14;
G01S 2205/01

(86) International application number:
**PCT/CN2022/113626**

(87) International publication number:
**WO 2024/036607 (22.02.2024 Gazette 2024/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventor: **WANG, Bingheng
Shenzhen, Guangdong 518129 (CN)**

(74) Representative: **Thun, Clemens
Mitscherlich PartmbB
Patent- und Rechtsanwälte
Karlstraße 7
80333 München (DE)**

(54)     **LOCATING METHOD AND APPARATUS, AND INTELLIGENT DRIVING DEVICE**

(57)     This application provides a positioning method and apparatus and a vehicle. The method includes: obtaining first location information of a first light source; determining a first ambient light sensor corresponding to the first light source, where the first ambient light sensor is in an ambient light sensor group; and determining second location information of the vehicle based on orientation information of the first ambient light sensor and the first location information. According to the method, the vehicle can be positioned in a low-cost and high-precision manner in a scenario in which natural light is insufficient.

300

S301: Obtain first location information of a first light source

S302: Determine a first ambient light sensor corresponding to the first light source, where the first ambient light sensor is in an ambient light sensor group

S303: Determine second location information of a vehicle based on orientation information of the first ambient light sensor and the first location information

FIG. 3

EP 4 564 860 A1

## Description

## TECHNICAL FIELD

This application relates to the field of intelligent driving, and more specifically, to a positioning method and apparatus and an intelligent driving device.

## BACKGROUND

As vehicles are widely used in daily life, precision of vehicle positioning is also increasingly valued. Currently, most vehicles may be positioned by using a global navigation satellite system (global navigation satellite system, GNSS).

However, positioning accuracy of the GNSS is unstable, and positioning cannot be performed in some scenarios (for example, a scenario in which a network signal is poor). In these scenarios, although a visual fusion positioning technology can assist or replace the GNSS in positioning, because a sensing object of the visual fusion positioning technology is visible light, both precision and accuracy of vehicle positioning are reduced in a scenario in which natural light of a vehicle is insufficient. In addition, although a laser fusion positioning technology can also be used for positioning, because a sensing object of the laser fusion positioning technology is a laser, application costs of the technology are high. Therefore, in a scenario in which natural light of a vehicle is insufficient, how to position the vehicle in a low-cost and high-precision manner is an urgent problem to be resolved.

## SUMMARY

This application provides a positioning method and apparatus and an intelligent driving device, so that the intelligent driving device can be positioned in a low-cost and high-precision manner in a scenario in which natural light is insufficient. The intelligent driving device includes a vehicle.

According to a first aspect, a positioning method is provided. The method includes: obtaining first location information of a first light source; determining a first ambient light sensor corresponding to the first light source, where the first ambient light sensor is in an ambient light sensor group, and the ambient light sensor group is installed on an intelligent driving device; and determining second location information of the intelligent driving device based on orientation information of the first ambient light sensor and the first location information.

The first light source may be a point light source (for example, a street lamp) on a road. The first location information may indicate a geographical location of the first light source. The first location information may be obtained from a high-definition map or a point cloud map, or may be obtained from another device through vehicle-to-everything (vehicle-to-everything, V2X).

Optionally, the ambient light sensor group may include a plurality of ambient light sensors, and an overall shape (appearance) of the ambient light sensor may be a smooth and continuous curved surface, and the curved surface has no dent. Light sensing directions of the plurality of ambient light sensors may be directions perpendicular to curved surfaces of the ambient light sensors.

Optionally, the orientation information of the first ambient light sensor may be understood as a direction of the first ambient light sensor facing the first light source. Further, the orientation information may be a pose of the first ambient light sensor.

It should be understood that the positioning method provided in this application may be applied to scenarios such as at night, at dusk, at dawn, or at nightfall.

In this application, the second location information of the intelligent driving device can be determined based on the orientation information of the first ambient light sensor and the first location information of the first light source. In this manner, the intelligent driving device can be positioned in a low-cost and high-precision manner in a scenario in which natural light is insufficient. The intelligent driving device includes a vehicle.

With reference to the first aspect, in some implementations of the first aspect, the determining a first ambient light sensor based on a light ray emitted by the first light source includes: obtaining a light intensity value that is of each ambient light sensor in the ambient light sensor group and that corresponds to the first light source; and determining that an ambient light sensor with a largest light intensity value in the ambient light sensor group is the first ambient light sensor.

The obtaining the light intensity value that is of each ambient light sensor and that corresponds to the first light source by obtaining a reading of each ambient light sensor includes: A sensor corresponding to a largest value of the reading is the first ambient light sensor.

For example, a value of the reading may range from 0 to 90. A larger reading indicates a larger light intensity value that is of the ambient light sensor and that corresponds to the first light source, and the first light source is vertically or approximately vertically incident to the first ambient light sensor.

In this application, light intensity values that are of the ambient light sensors in the ambient light sensor group and that correspond to the first light source may be collected, and then the sensor with the largest light intensity value is determined as the first ambient light sensor. In this manner, the first ambient light sensor corresponding to the first light source can be quickly and efficiently determined, and then precise positioning information of the intelligent driving device is obtained through calculation.

With reference to the first aspect, in some implementations of the first aspect, the orientation information is a pose of the first ambient light sensor in a world coordinate system. Before the determining second location information of the intelligent driving device based on orientation information of the first ambient light sensor and the first location information, the method further includes: obtaining third location information of the intelligent driving device, where the third location information is determined based on a global navigation satellite system; and the determining second location information of the intelligent driving device based on orientation information of the first ambient light sensor and the first location information includes: determining fourth location information of the first light source based on the pose of the first ambient light sensor in the world coordinate system, where the fourth location information is determined based on a theoretical incident light ray of the first ambient light sensor and a first plane, the first plane is a plane on which the first light source is located, the first plane is determined based on a second plane, the second plane is a plane on which the intelligent driving device is located, and the first plane is parallel to the second plane; determining a first offset vector based on the first location information and the fourth location information; and determining the second location information of the intelligent driving device based on the first offset vector and the third location information.

The world coordinate system may be an absolute coordinate system of a system. The world coordinate system may be a system for describing a location relationship between objects on the earth, and may indicate an absolute location of an object on the earth.

Optionally, the third location information may be rough initial positioning information of the intelligent driving device. One or several light sources near which the intelligent driving device is located may be determined based on the third location information.

After the pose of the first ambient light sensor in the world coordinate system is determined, the theoretical incident light ray of the ambient light sensor may be obtained. An intersection point between the theoretical incident light ray and the first plane is the fourth location information of the first light source. If the first location information of the intelligent driving device is precise positioning information, the first location information of the first light source is the same as the fourth location information. The third location information of the intelligent driving device does not need to be calibrated. In most cases, the first location information is different from the fourth location information. In this case, an offset vector needs to be obtained through calculation. The offset vector may be understood as a distance between the first location information and the fourth location information. The second location information (the precise positioning information of the intelligent driving device) is obtained by calibrating the third location information of the intelligent driving device by using the offset vector.

In the foregoing calculation process, the first plane needs to be first obtained. The first plane is determined based on the second plane, the first plane is the plane on which the light source is located, the first plane is parallel to the second plane, and the second plane is the plane on which the intelligent driving device is located. Optionally, the second plane is a plane determined based on a driving direction and a posture of the intelligent driving device. Optionally, if the intelligent driving device is considered as a point in the world coordinate system, the second plane may be a tangent plane of the point on a road surface.

It should be understood that, in the world coordinate system, the theoretical incident light ray, the first plane, and the second plane may be respectively represented as a theoretical incident light ray equation, a first plane equation, and a second plane equation.

It should be further understood that, in this application, the positioning information of the intelligent driving device and the location information of the intelligent driving device have a same meaning.

In this application, when obtained initial location information of the intelligent driving device is imprecise, the theoretical incident light ray can be determined based on the pose of the first ambient light sensor in the world coordinate system, and a theoretical positioning point of the first light source is obtained. Then, the offset vector is obtained, and an initial location of the intelligent driving device is calibrated by using the offset vector. In this manner, precise positioning information of the intelligent driving device can be obtained.

With reference to the first aspect, in some implementations of the first aspect, the method further includes: obtaining fifth location information of a second light source; determining a second ambient light sensor corresponding to the second light source, where the second ambient light sensor is in the ambient light sensor group; determining sixth location information of the second light source based on a pose of the second ambient light sensor in the world coordinate system, where the sixth location information is determined by a theoretical incident light ray of the second ambient light sensor and a third plane, the third plane is a plane on which the second light source is located, the third plane is determined based on the second plane, and the second plane is parallel to the third plane; determining a second offset vector based on the fifth location information and the sixth location information; and the determining the second location information of the intelligent driving device based on the first offset vector and the third location information includes: determining the second location information based on the first offset vector, the second offset vector, and the third location information.

Optionally, in this application, when the intelligent driving device is located between two light sources, mathematical analysis may be performed on readings of the ambient light sensor group, to determine the correct first ambient light sensor and the correct second ambient light sensor.

Optionally, a local largest value of the ambient light sensor group may be analyzed to obtain local largest light intensity readings respectively corresponding to the first light source and the second light source, and then information about the first ambient light sensor and the second ambient light sensor is obtained.

In this application, when the obtained initial location information of the intelligent driving device is imprecise, if the intelligent driving device is located between two light sources, the second offset vector may be determined based on the fifth location information and the sixth location information of the second light source, so that the initial location of the intelligent driving device can be calibrated based on the first offset vector and the second offset vector. This helps obtain more precise location information of the intelligent driving device.

With reference to the first aspect, in some implementations of the first aspect, the ambient light sensor group includes a plurality of ambient light sensors, and a surface of each of the plurality of ambient light sensors is a smooth curved surface without a dent.

Optionally, the ambient light sensor group may alternatively be a component having an integrally smooth and continuous curved surface without a dent.

In this application, the surface of each ambient light sensor in the ambient light sensor group is the smooth curved surface without a dent. In this manner, the theoretical incident light ray can be obtained more precisely, and then more precise location information of the intelligent driving device is obtained.

With reference to the first aspect, in some implementations of the first aspect, the ambient light sensor group includes a solar panel, and the solar panel is distributed on the top of the intelligent driving device.

In this application, the ambient light sensor group may include the solar panel. In this manner, in a driving process, the intelligent driving device can be charged, and can implement low-cost and high-precision positioning.

According to a second aspect, a positioning apparatus is provided. The apparatus includes an obtaining unit and a processing unit. The obtaining unit is configured to obtain first location information of a first light source. The processing unit is configured to: determine a first ambient light sensor corresponding to the first light source, where the first ambient light sensor is in an ambient light sensor group, and the ambient light sensor group is installed on an intelligent driving device; and determine second location information of the intelligent driving device based on orientation information of the first ambient light sensor and the first location information.

With reference to the second aspect, in some implementations of the second aspect, the obtaining unit is further configured to obtain a light intensity value that is of each ambient light sensor in the ambient light sensor group and that corresponds to the first light source. The processing unit is configured to determine that an ambient light sensor with a largest light intensity value in the ambient light sensor group is the first ambient light sensor.

With reference to the second aspect, in some implementations of the second aspect, the orientation information is a pose of the first ambient light sensor in a world coordinate system. The obtaining unit is further configured to obtain third location information of the intelligent driving device, where the third location information is determined based on a global navigation satellite system. The processing unit is configured to: determine fourth location information of the first light source based on the pose of the first ambient light sensor in the world coordinate system, where the fourth location information is determined based on a theoretical incident light ray of the first ambient light sensor and a first plane, the first plane is a plane on which the first light source is located, the first plane is determined based on a second plane, the second plane is a plane on which the intelligent driving device is located, and the first plane is parallel to the second plane; determine a first offset vector based on the first location information and the fourth location information; and determine the second location information of the intelligent driving device based on the first offset vector and the third location information.

With reference to the second aspect, in some implementations of the second aspect, the obtaining unit is further configured to obtain fifth location information of a second light source. The processing unit is further configured to: determine a second ambient light sensor corresponding to the second light source, where the second ambient light sensor is in the ambient light sensor group; determine sixth location information of the second light source based on a pose of the second ambient light sensor in the world coordinate system, where the sixth location information is determined by a theoretical incident light ray of the second ambient light sensor and a third plane, the third plane is a plane on which the second light source is located, the third plane is determined based on the second plane, and the second plane is parallel to the third plane; determine a second offset vector based on the fifth location information and the sixth location information; and determine the second location information based on the first offset vector, the second offset vector, and the third location information.

With reference to the second aspect, in some implementations of the second aspect, the ambient light sensor group includes a plurality of ambient light sensors, and a surface of each of the plurality of ambient light sensors is a smooth curved surface without a dent.

With reference to the second aspect, in some implementations of the second aspect, the ambient light sensor group includes a solar panel, and the solar panel is distributed on the top of the intelligent driving device.

According to a third aspect, a positioning apparatus is provided. The apparatus includes at least one processor and a memory. The at least one processor is coupled to the memory, and is configured to read and execute instructions in the memory, so that the apparatus implements the method in the first aspect and the implementations of the first aspect.

According to a fourth aspect, a computer-readable medium is provided. The computer-readable medium stores program code. When the computer program code is run on a computer, the computer is enabled to perform the method in the first aspect and the implementations of the first aspect.

According to a fifth aspect, a chip is provided. The chip includes a circuit, and the circuit is configured to perform the methods in the foregoing aspects.

According to a sixth aspect, an intelligent driving device is provided. The intelligent driving device includes the positioning apparatus in the second aspect and the third aspect and an ambient light sensor group. The ambient light sensor group includes a plurality of ambient light sensors, and a surface of each of the plurality of ambient light sensors is a smooth curved surface without a dent.

## BRIEF DESCRIPTION OF DRAWINGS

FIG. 1 is a schematic functional diagram of an intelligent driving device according to an embodiment of this application;

FIG. 2 is a system architecture to which a positioning method is applicable according to an embodiment of this application;

FIG. 3 is a schematic flowchart of a positioning method according to an embodiment of this application;

FIG. 4 is a schematic flowchart of another positioning method according to an embodiment of this application;

FIG. 5 is a schematic diagram of a location of an ambient light sensor group on a vehicle according to an embodiment of this application;

FIG. 6 is a schematic diagram of a shape and an orientation of an ambient light sensor group according to an embodiment of this application;

FIG. 7 is a line chart of an incident angle of light and a luminous flux per unit area of an ambient light sensor according to an embodiment of this application;

FIG. 8 is a schematic diagram of a reading of an ambient light sensor that can be obtained by a sub-sensor according to an embodiment of this application;

FIG. 9 is a schematic diagram of a method for determining a positioning point M according to an embodiment of this application;

FIG. 10 shows an application scenario to which a positioning method is applicable according to an embodiment of this application;

FIG. 11(a)-1 to FIG. 11(d)-2 show another application scenario to which a positioning method is applicable according to an embodiment of this application;

FIG. 12 shows a positioning apparatus according to an embodiment of this application; and

FIG. 13 shows another positioning apparatus according to an embodiment of this application.

## DESCRIPTION OF EMBODIMENTS

In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases. Only A exists, both A and B exist, and only B exists. In this application, "at least one" means one or more, and "a plurality of" means two or more. "At least one of the following items" or a similar expression means any combination of these items, including any combination of a single item or a plurality of items. For example, at least one item (piece) of a, b, or c may indicate: a, b, c, a and b, a and c, b and c, or a, b, and c, where a, b, and c may be singular or plural.

The prefix words "first", "second", and the like in embodiments of this application are merely intended to distinguish between different objects, and impose no limitation on locations, sequences, priorities, quantities, content, or the like of the described objects. In embodiments of this application, use of prefix words such as ordinal words used to distinguish between described objects constitutes no limitation on the described objects. For description of the described objects, refer to context description in claims or embodiments, and use of such a prefix shall not constitute an unnecessary limitation.

As vehicles are widely used in daily life, precision of vehicle positioning is also increasingly valued. Currently, most vehicles may be positioned by using a GNSS system.

However, positioning accuracy of the GNSS is unstable, and positioning cannot be performed in some scenarios (for example, a scenario in which a network signal is poor). In these scenarios, although a visual fusion positioning technology can assist or replace the GNSS in positioning, because a sensing object of the visual fusion positioning technology is visible light, both precision and accuracy of vehicle positioning are reduced in a scenario in which natural light of a vehicle is insufficient. Due to a difference in use of algorithms, expected error values of the positioning precision and stability of the vehicle at night may increase by two to four times.

In addition, although a laser fusion positioning technology can also be used for positioning, a sensing object of the laser fusion positioning technology is a laser, and laser fusion and the laser fusion positioning technology have high energy consumption costs, procurement costs, and computing costs. Therefore, in some specific scenarios in which natural light is insufficient, how to position a vehicle in a low-cost and high-precision manner is an urgent problem to be resolved. The foregoing specific scenarios may be, for example, at night, at dusk, at dawn, or at nightfall.

This application provides a positioning method and apparatus and an intelligent driving device, so that the intelligent driving device including a vehicle can be positioned in a low-cost and high-precision manner in a scenario in which natural light is insufficient. The following describes technical solutions of embodiments in this application with reference to accompanying drawings.

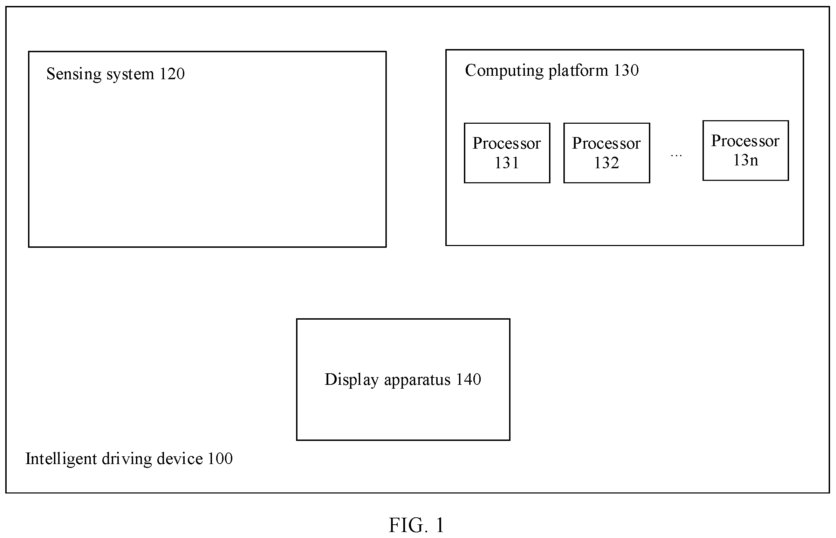

FIG. 1 is a schematic functional diagram of an intelligent driving device 100 according to an embodiment of this application. It should be understood that FIG. 1 and related description are merely examples, and do not constitute a limitation on the intelligent driving device in embodiments of this application.

In an implementation process, the intelligent driving device 100 may be configured to be in a fully or partially autonomous driving mode, or may be manually driven by a user. For example, the intelligent driving device 100 may obtain ambient environment information of the intelligent driving device 100 by using a sensing system 120, and obtain an autonomous driving policy based on analysis performed on the ambient environment information, to implement fully autonomous driving, or present an analysis result to the user, to implement partially autonomous driving.

The intelligent driving device 100 may include a plurality of subsystems, for example, a sensing system 120, a computing platform 130, and a display apparatus 140. Optionally, the intelligent driving device 100 may include more or fewer subsystems, and each subsystem may include one or more components. In addition, all the subsystems and components of the intelligent driving device 100 may be interconnected in a wired or wireless manner.

The sensing system 120 may include several types of sensors configured to sense the ambient environment information of the intelligent driving device 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 130. The computing platform 130 may include processors 131 to 13n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement a corresponding function.

The computing platform 130 may control a function of the intelligent driving device 100 based on an input received from various subsystems (for example, the sensing system 120). In some embodiments, the computing platform 130 may be configured to provide control over many aspects of the intelligent driving device 100 and the subsystems of the intelligent driving device 100.

Optionally, the foregoing components are merely examples. In actual application, components in the foregoing modules may be added or removed based on an actual requirement. FIG. 1 shall not be construed as a limitation on embodiments of this application.

The intelligent driving device 100 traveling on a road may recognize an object in the ambient environment of the intelligent driving device 100, to determine to adjust a current speed. The object may be another vehicle, a traffic control device, or another type of object. In some examples, each identified object may be considered independently, and may be used to determine the speed to be adjusted by the intelligent driving device 100 based on features of each object, such as a current speed of the object, acceleration of the object, and a distance between the object and the vehicle.

Optionally, the intelligent driving device 100 or a sensing and computing device (for example, the computing platform 130) associated with the intelligent driving device 100 may predict behavior of the identified object based on features of the identified object and a status of the ambient environment (for example, traffic, rain, or ice on a road). Optionally, all identified objects depend on behavior of each other. Therefore, all the identified objects may be considered together to predict behavior of a single identified object.

The intelligent driving device 100 in this application may include a vehicle on a road, a vehicle on water, a vehicle in air, an industrial device, an agricultural device, an entertainment device, or the like. For example, the intelligent driving device may be a vehicle. The vehicle is a vehicle in a broad sense, and may be a vehicle (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application. For another example, the intelligent driving device may be a vehicle, for example, an airplane or a ship.

The following describes, by using an example in which the intelligent driving device is a vehicle, a technical problem that needs to be resolved in this application and a technical solution used in this application.

Before a positioning method is described, a system architecture to which the positioning method according to an embodiment of this application is applicable is first described.

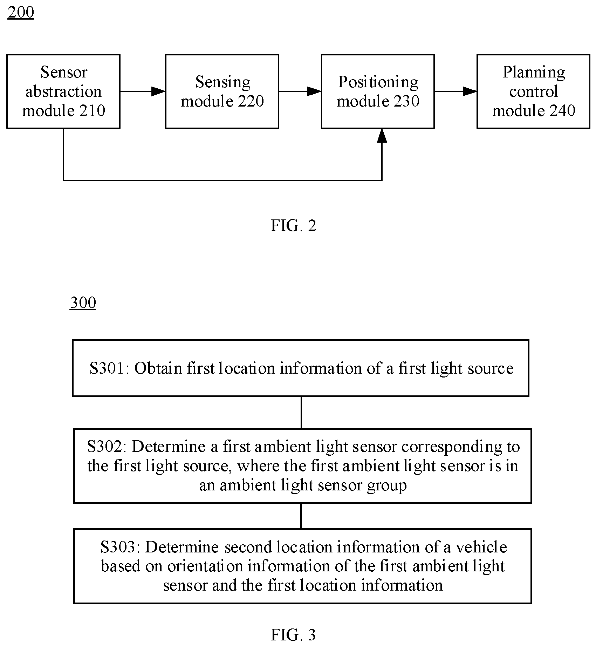

FIG. 2 is a system architecture 200 to which a positioning method according to an embodiment of this application is applicable. The system architecture shown in FIG. 2 may be applied to the intelligent driving device 100 in FIG. 1.

As shown in FIG. 2, the architecture 200 may include a sensor abstraction module 210, a sensing module 220, a positioning module 230, and a planning control module 240. An autonomous driving scenario of a vehicle is used as an example. The sensor abstraction module 210 can preprocess input data based on a sensor type, and input preprocessed data into the sensing module 220 and the positioning module 230. The sensing module 220 can obtain driving environment data of the vehicle based on the input data, and send the driving environment data to the positioning module 230. The positioning module 230 may position the vehicle based on the driving environment data of the vehicle and the data preprocessed by the sensor abstraction module 210, and input positioning result data into the planning control module 240. The planning control module 240 may implement an autonomous driving function based on the positioning result data.

In this embodiment of this application, the data output by the sensor abstraction module 210 and the sensing module 220 to the positioning module 230 is optimized, so that positioning precision of the vehicle is improved.

It should be understood that the sensor abstraction module 210 and the sensing module 220 may be located in the sensing system 120 in FIG. 1, and the positioning module 230 and the planning control module 240 may be located in the computing platform 130 in FIG. 1.

FIG. 3 is a schematic flowchart of a positioning method 300 according to an embodiment of this application. The method 300 may be performed by the intelligent driving device 100 in FIG. 1, may be performed by the computing platform 130 in the intelligent driving device 100, may be performed by a system on a chip (system on a chip, SOC) in the computing platform 130, or may be performed by a processor in the computing platform 130. The method 300 may include steps S301 to S303.

S301: Obtain first location information of a first light source.

The first light source may be a point light source (for example, a street lamp) on a road. The first location information may indicate a geographical location of the first light source. The first location information may be obtained from a high-definition map or a point cloud map, or may be obtained from another communication device through vehicle-to-everything.

S302: Determine a first ambient light sensor corresponding to the first light source.

Optionally, an ambient light sensor group includes a plurality of ambient light sensors, an overall shape (appearance) of each ambient light sensor may be a smooth and continuous curved surface, and the curved surface has no dent. A light sensing direction of each of the plurality of ambient light sensors may be a direction perpendicular to the curved surface of the ambient light sensor.

S303: Determine second location information of a vehicle based on orientation information of the first ambient light sensor and the first location information.

Optionally, the orientation information of the first ambient light sensor may be understood as a direction of the first ambient light sensor facing the first light source. Further, the orientation information may be a pose of the first ambient light sensor.

In this embodiment of this application, the second location information of the vehicle can be determined based on the orientation information of the first ambient light sensor and the first location information of the first light source. In this manner, the vehicle can be positioned in a low-cost and high-precision manner in a scenario in which natural light is insufficient.

In a possible implementation, the determining a first ambient light sensor based on a light ray emitted by the first light source includes: obtaining a light intensity value that is of each ambient light sensor in the ambient light sensor group and that corresponds to the first light source; and determining that an ambient light sensor with a largest light intensity value in the ambient light sensor group is the first ambient light sensor.

The obtaining the light intensity value that is of each ambient light sensor and that corresponds to the first light source by obtaining a reading of each ambient light sensor includes: A sensor corresponding to a largest value of the reading is the first ambient light sensor.

For example, a value of the reading may range from 0 to 90. A larger reading indicates a larger light intensity value that is of the ambient light sensor and that corresponds to the first light source, and the first light source is vertically or approximately vertically incident to the first ambient light sensor.

In this embodiment of this application, light intensity values that are of the ambient light sensors and that correspond to the first light source may be collected, and then the sensor with the largest light intensity value is determined as the first ambient light sensor. In this manner, the first ambient light sensor corresponding to the first light source can be quickly and efficiently determined, and then precise positioning information of the vehicle is obtained through calculation.

In a possible implementation, the orientation information is a pose of the first ambient light sensor in a world coordinate system. Before the determining second location information of a vehicle based on orientation information of the first ambient light sensor and the first location information, the method further includes: obtaining third location information of the vehicle, where the third location information is determined based on a global navigation satellite system; and the determining second location information of a vehicle based on orientation information of the first ambient light sensor and the first location information includes: determining fourth location information of the first light source based on the pose of the first ambient light sensor in the world coordinate system, where the fourth location information is determined based on a theoretical incident light ray of the first ambient light sensor and a first plane, the first plane is a plane on which the first light source is located, the first plane is determined based on a second plane, the second plane is a plane on which the vehicle is located, and the first plane is parallel to the second plane; determining a first offset vector based on the first location information and the fourth location information; and determining the second location information of the vehicle based on the first offset vector and the third location information.

The world coordinate system may be an absolute coordinate system of a system. The world coordinate system may be a system for describing a location relationship between objects on the earth, and may indicate an absolute location of an object on the earth.

Optionally, the third location information may be rough initial positioning information of the vehicle. One or several light sources near which the vehicle is located may be determined based on the third location information.

After the pose of the first ambient light sensor in the world coordinate system is determined, the theoretical incident light ray of the ambient light sensor may be obtained. An intersection point between the theoretical incident light ray and the first plane is the fourth location information of the first light source. If the first location information of the vehicle is precise positioning information, the first location information of the first light source is the same as the fourth location information. The third location information of the vehicle does not need to be calibrated. In most cases, the first location information is different from the fourth location information. In this case, an offset vector needs to be obtained through calculation. The offset vector may be understood as a distance between the first location information and the fourth location information. The second location information (the precise positioning information of the vehicle) is obtained by calibrating the third location information of the vehicle by using the offset vector.

In the foregoing calculation process, the first plane needs to be first obtained. The first plane is determined based on the second plane, the first plane is the plane on which the light source is located, the first plane is parallel to the second plane, and the second plane is the plane on which the vehicle is located. Optionally, the second plane may be a plane determined based on a driving direction and a posture of the vehicle. Optionally, if the vehicle is considered as a point in the world coordinate system, the second plane may be a tangent plane of the point on a road surface.

It should be understood that, in the world coordinate system, the theoretical incident light ray, the first plane, and the second plane may be respectively represented as a theoretical incident light ray equation, a first plane equation, and a second plane equation.

It should be further understood that, in this embodiment of this application, the positioning information of the vehicle and the location information of the vehicle have a same meaning.

In this embodiment of this application, when obtained initial location information of the vehicle is imprecise, the theoretical incident light ray can be determined based on the pose of the first ambient light sensor in the world coordinate system, and a theoretical positioning point of the first light source is obtained. Then, the offset vector is obtained, and an initial location of the vehicle is calibrated by using the offset vector. In this manner, the precise positioning information of the vehicle can be obtained.

In a possible implementation, the method further includes: obtaining fifth location information of a second light source; determining a second ambient light sensor corresponding to the second light source, where the second ambient light sensor is in the ambient light sensor group; determining sixth location information of the second light source based on a pose of the second ambient light sensor in the world coordinate system, where the sixth location information is determined by a theoretical incident light ray of the second ambient light sensor and a third plane, the third plane is a plane on which the second light source is located, the third plane is determined based on the second plane, and the second plane is parallel to the third plane; determining a second offset vector based on the fifth location information and the sixth location information; and the determining the second location information of the vehicle based on the first offset vector and the third location information includes: determining the second location information based on the first offset vector, the second offset vector, and the third location information.

Optionally, if the vehicle is located between two light sources, mathematical analysis may be performed on readings of the ambient light sensor group, to determine the correct first ambient light sensor and the correct second ambient light sensor.

Optionally, a local largest value of the ambient light sensor group may be analyzed to obtain local largest light intensity readings respectively corresponding to the first light source and the second light source, and then information about the correct first ambient light sensor and the correct second ambient light sensor is obtained.

In this embodiment of this application, when the obtained initial location information of the vehicle is imprecise, if the vehicle is located between two light sources, the second offset vector may be determined based on the fifth location information and the sixth location information of the second light source, so that the initial location of the vehicle can be calibrated based on the first offset vector and the second offset vector. This helps obtain more precise location information of the vehicle.

In a possible implementation, the ambient light sensor group includes the plurality of ambient light sensors, the ambient light sensor group includes the plurality of ambient light sensors, and a surface of each of the plurality of ambient light sensors is a smooth curved surface without a dent.

Optionally, the ambient light sensor is a component having an integrally smooth and continuous curved surface without a dent.

In this embodiment of this application, the surface of each ambient light sensor in the ambient light sensor group is the smooth curved surface without a dent. In this manner, the theoretical incident light ray can be obtained more precisely, and then more precise location information of the vehicle is obtained.

In a possible implementation, the ambient light sensor group includes a solar panel, and the solar panel is distributed on the top of the vehicle.

In this embodiment of this application, the ambient light sensor group may include the solar panel. In this manner, in a driving process, the vehicle can implement a charging function, and can implement low-cost and high-precision positioning.

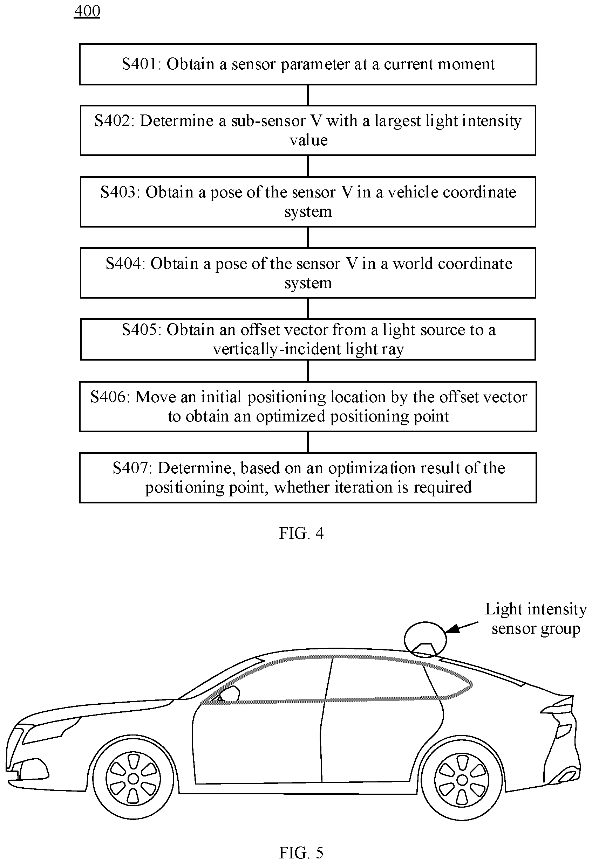

FIG. 4 is a schematic flowchart of another positioning method 400 according to an embodiment of this application. The method 400 may be performed by the intelligent driving device 100 in FIG. 1, may be performed by the computing platform 130 in the intelligent driving device 100, may be performed by a SOC in the computing platform 130, or may be performed by a processor in the computing platform 130. The method 400 is a specific description of an implementation in the method 300. As shown in FIG. 4, the method 400 may include the following steps.

S401: Obtain a sensor parameter at a current moment.

The sensor parameter may include geographical location information of a light source and positioning information of a vehicle. The geographical location information of the light source may indicate a geographical location of a point light source (for example, a street lamp) illuminating on a road. The geographical location information of the light source may be 3D information. The information may be obtained from a high-definition map or a point cloud map, or may be obtained from another device through vehicle-to-everything. The positioning information of the vehicle may be positioning information with low positioning precision, but is sufficient to determine a specific light source under which the vehicle is located or two light sources between which the vehicle is located. The positioning information may be obtained by using a GNSS, an inertial navigation system (inertial navigation system, INS), or an odometer. Alternatively, the positioning information may be obtained by performing data fusion on a GNSS, an INS, and an odometer.

A sensor may be an ambient light sensor group (ambient light sensor group, ALSG). The ALSG may include several ambient light sensors (sub-sensors). The ambient light sensor may sense an electromagnetic wave in a specific wavelength range in an environment. The ambient light sensor includes but is not limited to an optical pressure sensor, an infrared sensor, or a solar panel.

It should be understood that the geographical location information of the light source in the method 400 may be the first location information in the method 300, and the positioning information of the vehicle may be the third location information in the method 300.

A location of the ALSG sensor in the vehicle may be shown in FIG. 5. A design of the ALSG sensor may meet the following conditions.

(1) An overall shape of the ALSG is the same as that of a hemisphere topology, and the shape is a convex hull.

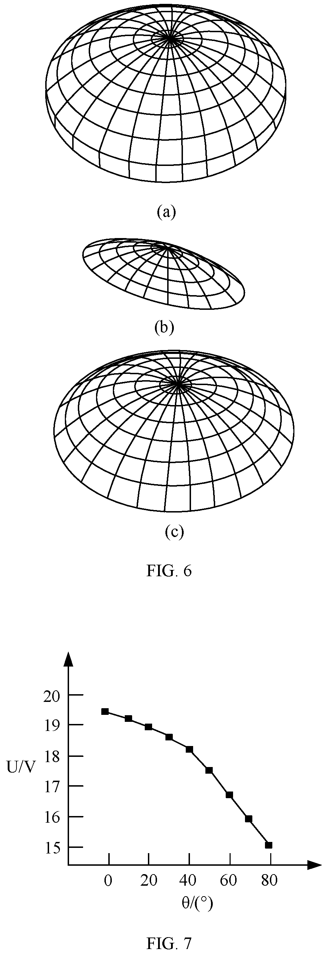

(2) A plurality of sub-sensors are disposed on the ALSG. In this way, it can be ensured that incident light in any direction right above or above the vehicle is vertically incident to only one sub-sensor. There needs to be a specific angle difference between adjacent sub-sensors on the ALSG. This can ensure that all sub-sensors face different directions. That is, shapes and orientations of the sub-sensors may be shown in (a) to (c) in FIG. 6, where each small area in a hemisphere may indicate a photosensitive surface of a sub-sensor.

(3) A light sensing direction of the sub-sensor is perpendicular to a curved surface of the photosensitive surface of the sub-sensor.

(4) A location of the sub-sensor is fixed. This ensures that a physical location of each sub-sensor and a direction of a received vertically-incident light are fixed values in a vehicle coordinate system.

It should be understood that the shapes and the directions of the sub-sensors shown in (a) to (c) in FIG. 6 are merely example descriptions, and actual shapes and directions of the sub-sensors may change based on an actual application situation of the sub-sensors. For example, shapes of light sensitive surfaces of the sub-sensors in (a) to (c) in FIG. 6 may be quadrilaterals with equal areas. For another example, angles between different sub-sensors may not be equal.

S402: Determine a sub-sensor V with a largest light intensity value.

For example, the vehicle travels under a light source. It is assumed that there is a main light source L near the vehicle. Because the main light source L is a light source near the vehicle, luminance of the main light source L is higher than luminance of another light source.

As shown in FIG. 7, the figure is a line chart of an incident angle of light and a luminous flux per unit area of the ALSG. A horizontal axis of the line chart indicates an angle between an incident light ray and a normal line of a photosensitive surface of a sub-sensor, namely, an incident angle of the light ray. A vertical axis of the line chart indicates a luminous flux per unit area of the ALSG. It can be learned from the figure that a larger incident angle of the light ray indicates a smaller luminous flux per unit area. When the light ray is vertically incident, that is, the incident angle of the light ray is 0, the luminous flux per unit area is the largest. Therefore, only a sub-sensor that is subject to vertical incidence or approximately vertical incidence can obtain a largest reading of the ambient light sensor.

It should be understood that, when the incident angle of the photosensitive surface of the ambient light sensor is 0, it may indicate vertical incidence of light, which is referred to as vertical incidence for short. When the incident angle is less than a preset threshold, it may indicate approximately vertical incidence. The preset threshold may be set based on density of the ALSG. When an adjacent angle difference is smaller, the preset threshold may be set to a smaller value.

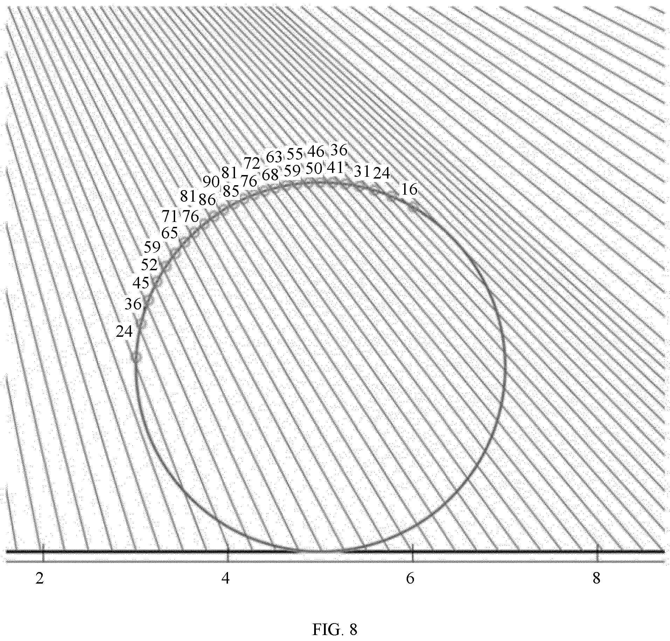

FIG. 8 is a schematic diagram of readings of ambient light sensors that can be obtained by different sub-sensors. A small circle in the figure indicates a sub-sensor. It can be learned from the figure that a point marked as 90 is a sub-sensor that is subject to vertical incidence or approximately vertical incidence of light. The sub-sensor is denoted as a sensor V, and the sensor V is a sub-sensor with a largest reading. The sensor V is easily obtained by a system.

It should be further understood that the sensor V in the method 400 may be the first ambient light sensor or the second ambient light sensor in the method 300.

S403: Obtain a pose of the sensor V in the vehicle coordinate system.

Specifically, it can be learned from step S401 that the sensor V is used as a sub-sensor, and a location of the sensor V on the AL SG is fixed. In other words, the pose $P_{v\text{-}car}$ of the sensor V in the vehicle coordinate system may be a constant or a fixed value. In a same coordinate system, the pose $P_{v\text{-}car}$ of the sensor V may be transformed into a pose of a rear axis center of the vehicle by using a unique transformation matrix $T_v$, where the pose of the rear axis center of the vehicle is a pose of the vehicle. In this process, a location in the pose of the sensor V may indicate three-dimensional geometric coordinates of the sensor V in the vehicle coordinate system, and a posture may indicate a direction vector of vertically-incident light that is vertically incident to the sensor V

S404: Obtain a pose of the sensor V in a world coordinate system.

Specifically, because location precision in the pose of the vehicle is low, and the posture is high, the pose of the sensor V in the world coordinate system may be obtained according to the following formula:

$$P_{v\text{-}world}=P_{car\text{-}world}T_v^{-1}$$

Herein, $P_{v\text{-}world}$ is the pose of the sensor V in the world coordinate system, $P_{car\text{-}world}$ is a pose of the vehicle in the world coordinate system, and $T_v$ is the transformation matrix.

After the pose of the sensor V in the world coordinate system is obtained, a theoretical incident light line F of the sensor V may be further obtained. A theoretical incident light ray F may be represented in a form of a system of linear equations in the world coordinate system (where coordinates of a point on a straight line and a direction of the straight line are known mathematically, and then a linear equation may be determined). That is, if a positioning result is accurate, a real incident light ray of the light source L may illuminate the sensor V along the theoretical incident light ray F.

In a geographic coordinate system like a universal transverse Mercator grid system (universal transverse Mercator grid system, UTM), a small range of space may be considered as Euclidean space. A distance $D_{L\text{-}F}$ between the light source L and the theoretical incident light ray F may be obtained according to a formula of a distance between a point and a straight line. If $D_{L\text{-}F}$ is equal to or close to 0, it indicates that F passes through the light source L, the light source L may be considered as incident light, and the positioning result of the vehicle is accurate. In this case, the positioning result may be directly input into a positioning planning module of the vehicle. Then, steps S405 to S407 are not performed.

Optionally, in this embodiment of this application, the light source L may be a point light source. Further, the light source L may be a street lamp.

S405: Obtain an offset vector from the light source to a vertically-incident light ray.

In most cases, because precision of the positioning information of the vehicle obtained in step S401 is low, $D_{L\text{-}F}$ is usually not equal to or close to 0. Therefore, in this case, F cannot be considered as a real incident light ray, but is only real incident parallel light. In this case, a tangent plane equation $C_1$ (In mathematics, a determined tangent plane may be obtained based on a determined pose of the vehicle) of the vehicle in the world coordinate system relative to a road may be determined based on the pose of the vehicle in the world coordinate system, and a parallel plane $C_2$ that passes through the light source L is obtained according to $C_1$.

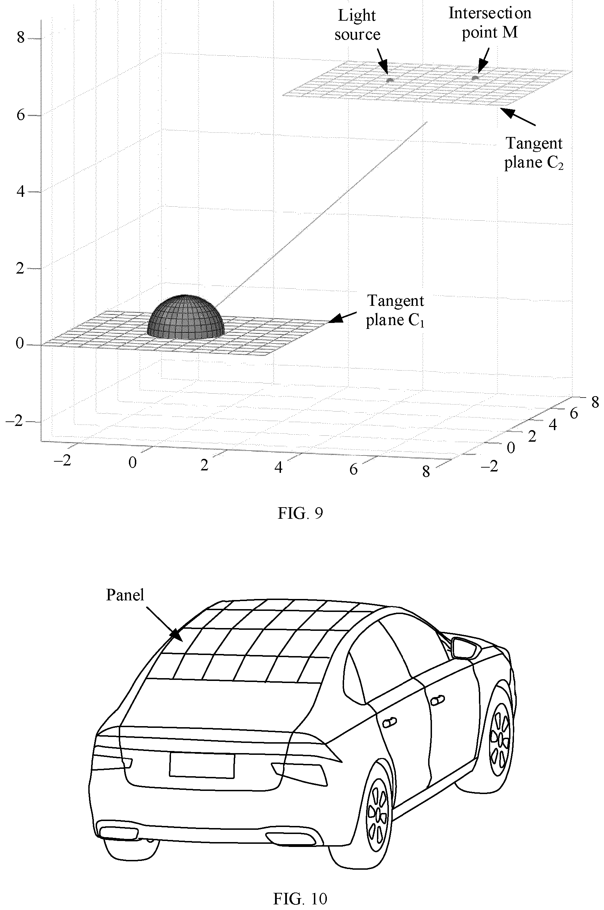

As shown in FIG. 9, a large hemisphere in the figure is the ambient light sensor group, a plane on which the large hemisphere is located is $C_1$, a plane on which the light source is located is $C_2$, and an intersection point M is an intersection point between F and the plane $C_2$. An offset vector $\overrightarrow{ML}$ may be determined based on the intersection point M and an intersection point between real incident light ray and $C_2$. Because the real incident light ray is in a parallel relationship with F, and $C_1$ is parallel to $C_2$, the offset vector $\overrightarrow{ML}$ is also an offset vector between initial positioning and real positioning.

It should be understood that the plane $C_2$ in the method 400 may be the first plane or the third plane in the method 300, the plane $C_1$ may be the second plane in the method 300, the intersection point M may be the fourth location information in the method 300, and the offset vector $\overrightarrow{ML}$ may be the first offset vector in the method 300.

S406: Move an initial positioning location to obtain an optimized positioning point.

In most cases, the ground is flat, and an error between the initial positioning location of the vehicle and an actual location does not exceed 15 meters. Therefore, it may be assumed that the ground is equivalent to $C_1$. In this case, an optimized vehicle positioning location $P_{opt}$ may be obtained based on the initial positioning location $P_{car\text{-}world}$+the offset vector $\overrightarrow{ML}$. After the optimized vehicle positioning location $P_{opt}$ is obtained, data may be input into the positioning planning module of the vehicle. Then, step S407 is not performed.

It should be understood that the vehicle positioning location $P_{opt}$ may be the second location information in the method 300.

S407: Determine, based on an optimization result of the positioning point, whether iteration is required.

In some other cases, when curvature of the ground is large, a terrain needs to be obtained by using a map module of the vehicle for special processing. A processing manner may be: A Newton's method is used. To be specific, the curvature of the ground is obtained from the map module, a tangent plane equation at the location $P_{opt}$ is obtained based on the curvature and the offset vector $\overrightarrow{ML}$, then $P_{opt}$ is considered as a new initial positioning location, and steps S404 to S406 are performed iteratively. When a modulus of $\overrightarrow{ML}$ is less than a preset threshold, or a quantity of iterations is greater than or equal to a preset quantity of times, iteration is stopped, and $P_{opt}$ is input into the positioning planning module of the vehicle.

It should be understood that the curvature of the ground may indicate an undulation degree of the ground. A larger curvature value indicates a more uneven ground and a greater undulation degree of the ground.

It should be further understood that the method 400 is described by using a scenario in which the vehicle travels under one light source as an example. When the vehicle is located between two light sources (for example, two street lamps), a processing manner is similar to that of the method 400. To be specific, in this case, there are two sub-sensors V that are respectively sub-sensors whose reading is a largest value in the ambient light sensor group corresponding to each light source. In this case, positioning optimization calculation of the method 400 may be separately performed on the two sensors, to obtain two optimized positioning points $P_{opt1}$ and $P_{opt2}$. A midpoint of a connection line between $P_{opt1}$ and $P_{opt2}$ may be used as a positioning point. In this way, higher positioning precision can be usually obtained. In addition, the foregoing method may alternatively be applied to a scenario in which there are a plurality of light sources by analogy.

In this embodiment of this application, a positioning point location can be determined based on the pose of the ambient light sensor in the world coordinate system, the offset vector between the positioning point location and a location of a real light source is calculated, and vehicle positioning is calibrated by using the offset vector. In this way, the vehicle can be positioned in a low-cost and high-precision manner in a scenario in which natural light is insufficient.

FIG. 10 shows an application scenario to which a positioning method according to an embodiment of this application is applicable. The method 300 and the method 400 may be applied to the application scenario.

As shown in FIG. 10, one or more solar panels may be deployed on the top of a vehicle, and a sensor that can measure power generation efficiency or a power generation voltage value of each panel may be disposed under the panel. There is a correspondence between a current light intensity of incident light and a power generation voltage of the panel, that is, a larger light intensity of the incident light indicates a higher power generation voltage of the panel. In this way, because the panels are distributed in a streamlined manner on the vehicle, there is universal light for illumination right above and above the panel. A design condition of the ambient light sensor group in the method 300 and the method 400 may be met provided that density of a voltage sensor is sufficient. In this way, the panels of the entire vehicle may be considered as the ALSG. When the vehicle travels under a point light source at night, electricity may be generated by using a photoelectric reaction of the panels, so that a reading of the voltage sensor indirectly reflects a light intensity of incident light on each panel. In this way, night positioning of the vehicle can be implemented according to the method 300 and the method 400.

It should be understood that, for an object at any angle $\alpha$ within a specific angle range in a specific scenario, if light parallel to $\alpha$ inevitably exists, and the light is vertically or approximately vertically incident to the object, it may be considered that, in this scenario, there is universal light corresponding to the object within the angle range for illumination. In this embodiment of this application, when the vehicle travels in a scenario in which there is a light source at night for illumination, there is universal light within an angle range for illumination right above and above the ALSG.

In this embodiment of this application, the ambient light sensor is set as the solar panel, so that a charging requirement of the vehicle during driving can be met, and night positioning can be performed on the vehicle in a low-cost and high-precision manner.

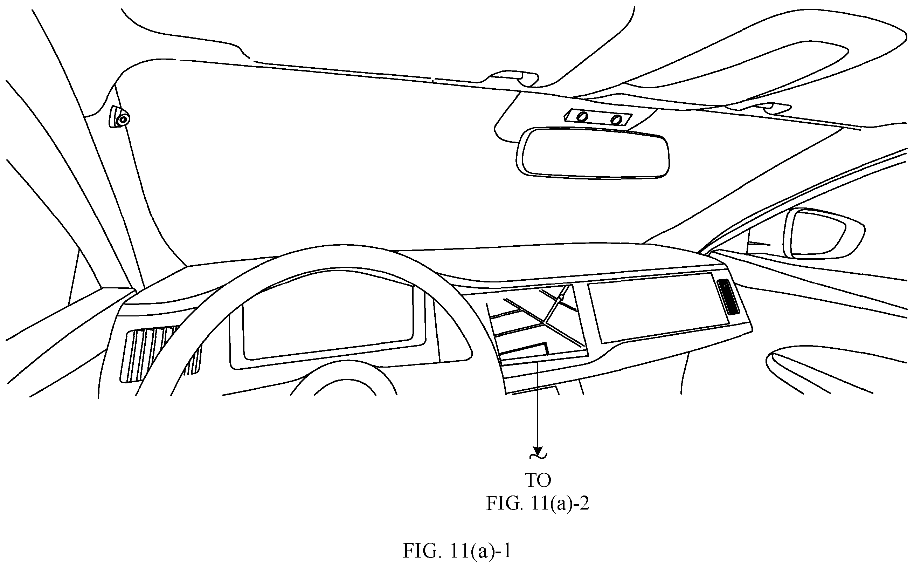

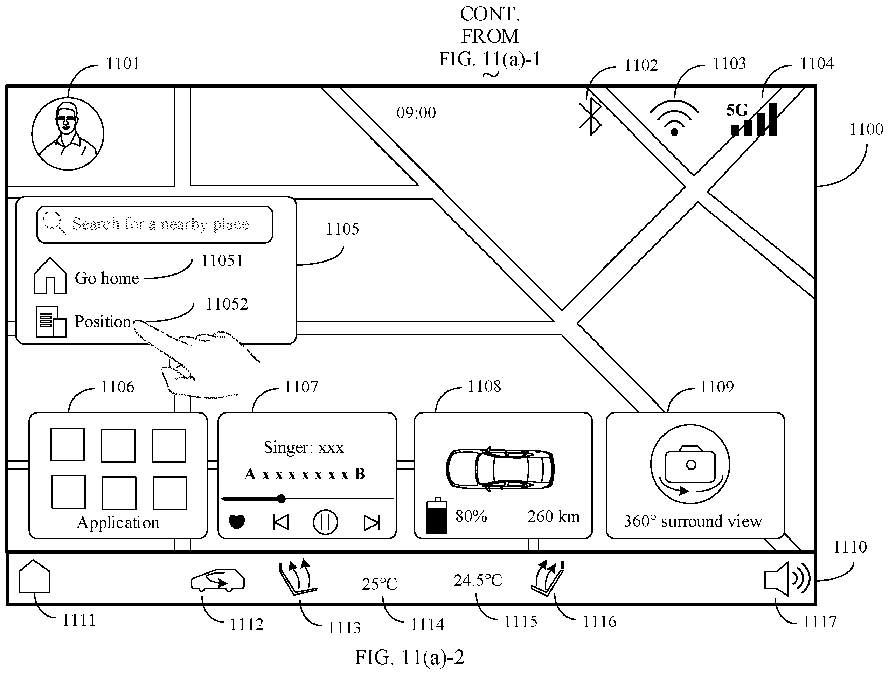

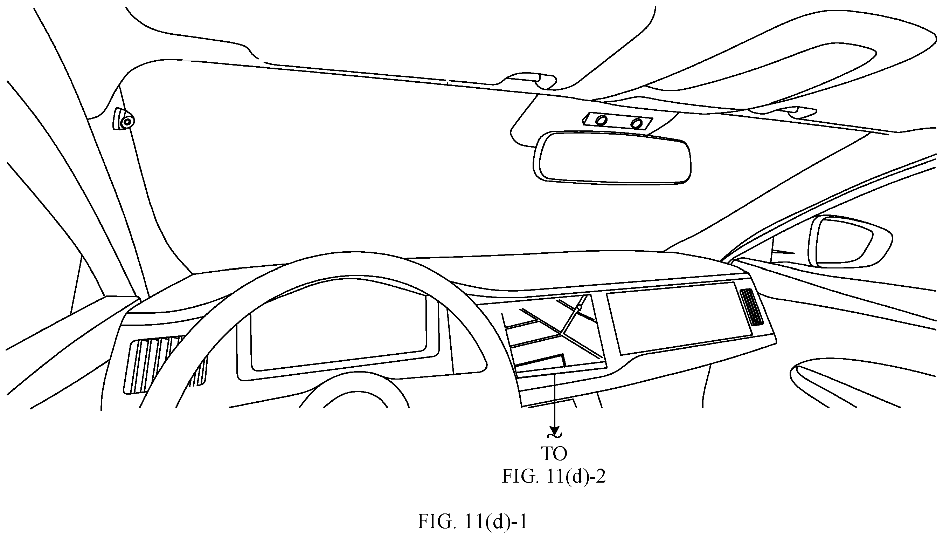

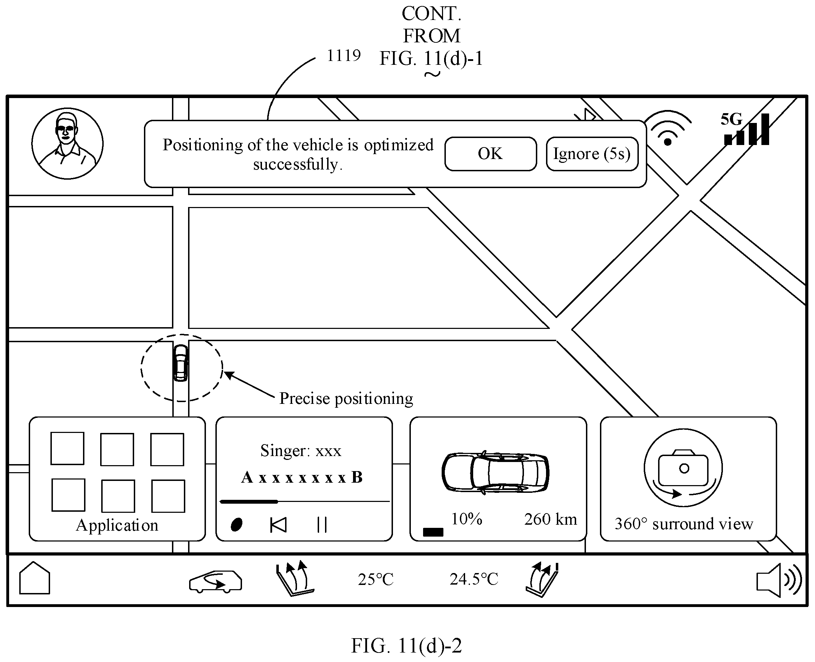

FIG. 11(a)-1 to FIG. 11(d)-2 show another application scenario to which a positioning method according to an embodiment of this application is applicable. The method 300 and the method 400 may be applied to the application scenario.

As shown in FIG. 11(a)-1 and FIG. 11(a)-2, when a vehicle is in a normal driving state, a large central control screen in the vehicle displays an interface 1100 and a function bar 1110. The interface 1100 includes user account login information 1101, a Bluetooth function icon 1102, a Wi-Fi function icon 1103, a cellular network signal icon 1104, a vehicle-mounted map application search box 1105, a widget 1106 for switching to display all applications installed on the vehicle, a widget 1107 for switching to display a vehicle-mounted music application, a widget 1108 for displaying remaining power of a vehicle and a remaining driving mileage, and a widget 1109 for displaying a 360-degree (°) surround view function of a vehicle. The vehicle-mounted map application search box 1105 may include a go home control 11051 and a positioning control 11052 that are set by a user. The function bar 1110 includes an icon 1111 for switching to display a desktop of the large central control screen, an icon 1112 for internal air circulation of the vehicle, an icon 1113 for a driver's seat heating function, an icon 1114 for displaying an air conditioner temperature of a driver area, an icon 1115 for displaying an air conditioner temperature of a front passenger area, an icon 1116 for displaying a front passenger's seat heating function, and a volume setting icon 1117.

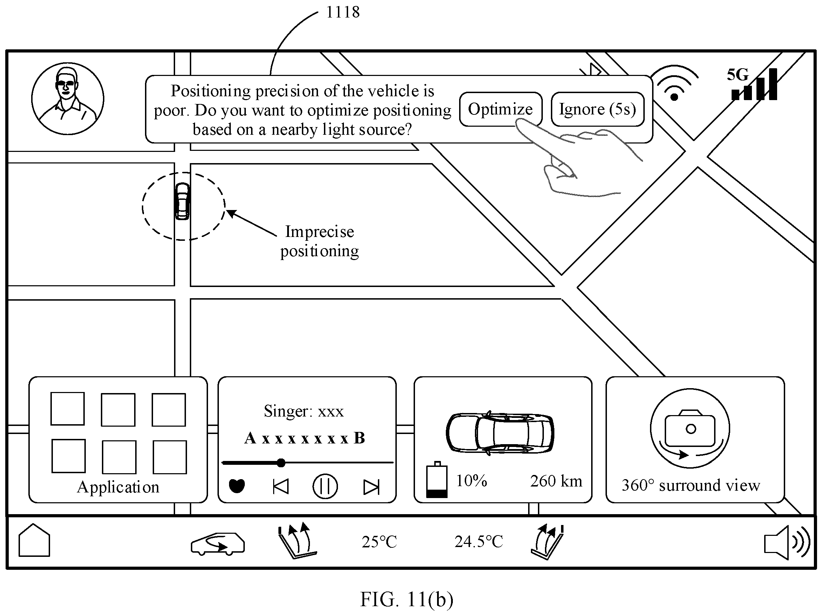

The user may view, by using the positioning control 11052, a location of the vehicle on a map in real time. After the vehicle detects an operation of tapping the positioning control 11052 by the user, the interface 1100 may display a graphical user interface (graphical user interface, GUI) shown in FIG. 11(b).

On the GUI shown in FIG. 11(b), in some cases (for example, a case in which a network signal is poor), GNSS positioning is imprecise. In this case, the interface 1100 may display a prompt box 1118, to inform the user that current positioning precision of the vehicle is poor, and whether positioning optimization is performed based on a nearby light source. When the vehicle detects an operation of tapping an optimization control in the prompt box 1118 by the user, the vehicle may optimize positioning of the vehicle according to the method 300 or the method 400.

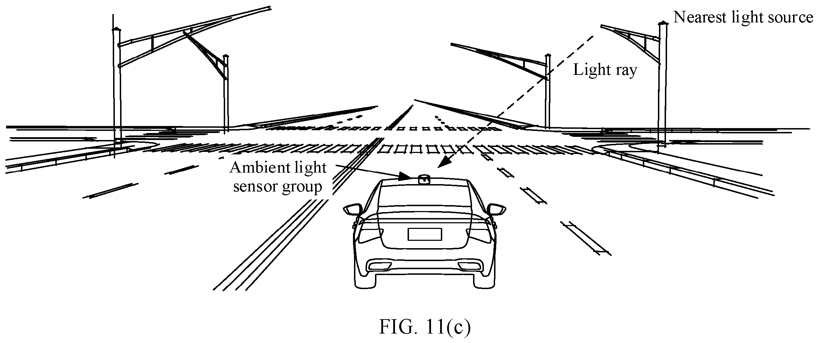

For example, as shown in FIG. 11(c), the vehicle may determine a light source nearest to the vehicle based on initial positioning information (imprecise positioning information), may determine a first ambient light sensor based on the nearest light source, may determine a theoretical incident light ray of the first ambient light sensor based on a pose of the first ambient light sensor in a world coordinate system, and determine a first offset vector. Then, the initial positioning information of the vehicle may be calibrated by using the first offset vector, to obtain precise positioning information of the vehicle.

On the GUI shown in FIG. 11(d)-1 and FIG. 11(d)-2, after the initial positioning information of the vehicle is optimized according to the method 300 or the method 400, the interface 1100 may display a precise location of the vehicle on the map, and may display a prompt box 1119, to notify the user that positioning of the vehicle is optimized successfully.

It should be understood that the vehicle may be the intelligent driving device 100 in FIG. 1, and the interface 1100 may be an interface displayed on the display apparatus 140 in FIG. 1.

An embodiment of this application further provides an apparatus configured to implement either of the foregoing methods. The apparatus includes units configured to implement steps performed by the intelligent driving device 100 in either of the foregoing methods.

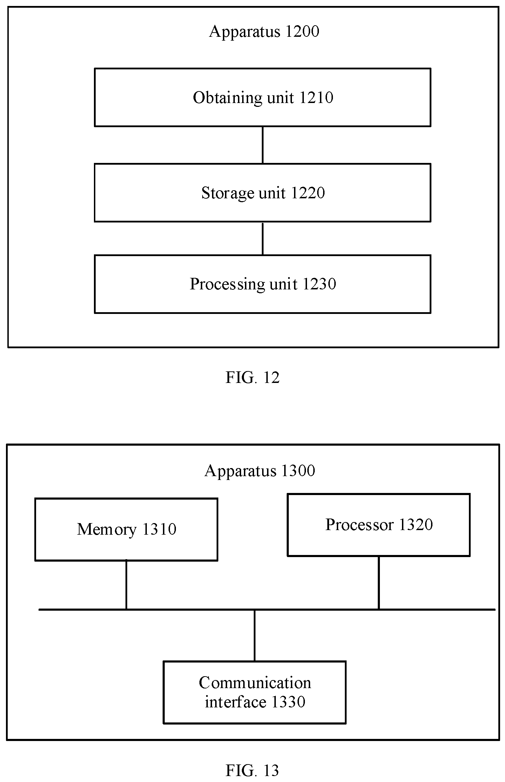

FIG. 12 is a schematic diagram of a positioning apparatus 1200 according to an embodiment of this application. The apparatus 1200 may include an obtaining unit 1210, a storage unit 1220, and a processing unit 1230. The obtaining unit 1210 is configured to obtain instructions and/or data. The obtaining unit 1210 may also be referred to as a communication interface or a communication unit. The storage unit 1220 is configured to: implement a corresponding storage function, and store corresponding instructions and/or data. The processing unit 1230 is configured to process the data. The processing unit 1230 may read the instructions and/or the data in the storage unit, so that the apparatus 1200 implements the foregoing positioning methods.

In a possible implementation, the apparatus 1200 includes the obtaining unit 1210 and the processing unit 1230. The obtaining unit 1210 is configured to obtain first location information of a first light source. The processing unit 1230 is configured to: determine a first ambient light sensor corresponding to the first light source, where the first ambient light sensor is in an ambient light sensor group, and the ambient light sensor group is installed on an intelligent driving device; and determine second location information of the intelligent driving device based on orientation information of the first ambient light sensor and the first location information.

In a possible implementation, the obtaining unit 1210 is further configured to obtain a light intensity value that is of each ambient light sensor in the ambient light sensor group and that corresponds to a first light source. The processing unit 1230 is configured to determine that an ambient light sensor having a largest light intensity value in the ambient light sensor group is the first ambient light sensor.

In a possible implementation, the orientation information is a pose of the first ambient light sensor in a world coordinate system. The obtaining unit 1210 is further configured to obtain third location information of the intelligent driving device, where the third location information is determined based on a global navigation satellite system. The processing unit 1230 is configured to: determine fourth location information of the first light source based on the pose of the first ambient light sensor in the world coordinate system, where the fourth location information is determined based on a theoretical incident light ray of the first ambient light sensor and a first plane, the first plane is a plane on which the first light source is located, the first plane is determined based on a second plane, the second plane is a plane on which the intelligent driving device is located, and the first plane is parallel to the second plane; determine a first offset vector based on the first location information and the fourth location information; and determine the second location information of the intelligent driving device based on the first offset vector and the third location information.

In a possible implementation, the obtaining unit 1210 is further configured to obtain fifth location information of a second light source. The processing unit 1230 is further configured to: determine a second ambient light sensor corresponding to the second light source, where the second ambient light sensor is in the ambient light sensor group; determine sixth location information of the second light source based on a pose of the second ambient light sensor in the world coordinate system, where the sixth location information is determined by a theoretical incident light ray of the second ambient light sensor and a third plane, the third plane is a plane on which the second light source is located, the third plane is determined based on the second plane, and the second plane is parallel to the third plane; determine a second offset vector based on the fifth location information and the sixth location information; and determine the second location information based on the first offset vector, the second offset vector, and the third location information.

In a possible implementation, the ambient light sensor group includes a plurality of ambient light sensors, and a surface of each of the plurality of ambient light sensors is a smooth curved surface without a dent.

In a possible implementation, the ambient light sensor group includes a solar panel, and the solar panel is distributed on the top of the intelligent driving device.

It should be understood that division of the units in the apparatus is merely logical function division. During actual implementation, all or some of the units may be integrated into one physical entity, or may be physically separated.

Optionally, if the apparatus 1200 is located in the intelligent driving device 100, the processing unit 1230 may be the processor 131 shown in FIG. 1.

Optionally, if the apparatus 1200 is located in the system architecture 200, the obtaining unit 1210 may be the sensing module 220, and the processing unit 1230 may be the positioning module 230.

FIG. 13 is a schematic diagram of an apparatus 1300 of another positioning apparatus according to an embodiment of this application. The apparatus 1300 may be used in the intelligent driving device 100 in FIG. 1.

The apparatus 1300 of the positioning apparatus includes a memory 1310, a processor 1320, and a communication interface 1330. The memory 1310, the processor 1320, and the communication interface 1330 are connected through an internal connection path. The memory 1310 is configured to store instructions. The processor 1320 is configured to execute the instructions stored in the memory 1310, to control the communication interface 1330 to obtain information, or enable the positioning apparatus to perform the positioning methods in the foregoing embodiments. Optionally, the memory 1310 may be coupled to the processor 1320 through an interface, or integrated with the processor 1320.

It should be noted that the communication interface 1330 uses a transceiver apparatus like but not limited to a transceiver. The communication interface 1330 may further include an input/output interface (input/output interface).

The processor 1320 stores one or more computer programs, and the one or more computer programs include instructions. When the instructions are run by the processor 1320, the positioning apparatus 1300 is enabled to perform the positioning methods in the foregoing embodiments.

In an implementation process, steps in the foregoing methods may be implemented by using a hardware integrated logic circuit in the processor 1320 or instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1310, and the processor 1320 reads information in the memory 1310, and completes the steps in the foregoing methods in combination with hardware of the processor. To avoid repetition, details are not described herein again.

Optionally, the obtaining unit 1210 may be the communication interface 1330 in FIG. 13 that may implement the obtaining unit 1210 in FIG. 12, the memory 1310 in FIG. 13 may implement the storage unit in FIG. 12, and the processor 1320 in FIG. 13 may implement the processing unit 1230 in FIG. 12.

Optionally, the apparatus 1200 or the apparatus 1300 may be a computing platform. The computing platform may be a vehicle-mounted computing platform or a cloud computing platform.

Optionally, the apparatus 1200 or the apparatus 1300 may be located in the intelligent driving device 100 in FIG. 1.

Optionally, the apparatus 1200 or the apparatus 1300 may be the computing platform 130 in the intelligent driving device in FIG. 1.

An embodiment of this application further provides a computer-readable medium. The computer-readable medium stores program code, and when the computer program code is run on a computer, the computer is enabled to perform any method in FIG. 3 or FIG. 4.

An embodiment of this application further provides a chip, including a circuit. The circuit is configured to perform any method in FIG. 3 or FIG. 4.

An embodiment of this application further provides an intelligent driving device, including any positioning apparatus in FIG. 12 or FIG. 13 and an ambient light sensor group. The ambient light sensor group includes a plurality of ambient light sensors, and a surface of each of the plurality of ambient light sensors is a smooth curved surface without a dent. The intelligent driving device may be a vehicle.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, wherein the method comprises:

   obtaining first location information of a first light source;
   determining a first ambient light sensor corresponding to the first light source, wherein the first ambient light sensor is in an ambient light sensor group, and the ambient light sensor group is installed on an intelligent driving device; and
   determining second location information of the intelligent driving device based on orientation information of the first ambient light sensor and the first location information.

2.  The method according to claim 1, wherein the determining a first ambient light sensor based on a light ray emitted by the first light source comprises:

    obtaining a light intensity value that is of each ambient light sensor in the ambient light sensor group and that corresponds to the first light source; and
    determining that an ambient light sensor with a largest light intensity value in the ambient light sensor group is the first ambient light sensor.

3.  The method according to claim 1 or 2, wherein the orientation information is a pose of the first ambient light sensor in a world coordinate system;
    before the determining second location information of the intelligent driving device based on orientation information of the first ambient light sensor and the first location information, the method further comprises:

    obtaining third location information of the intelligent driving device, wherein the third location information is determined based on a global navigation satellite system; and
    the determining second location information of the intelligent driving device based on orientation information of the first ambient light sensor and the first location information comprises:

    determining fourth location information of the first light source based on the pose of the first ambient light sensor in the world coordinate system, wherein the fourth location information is determined based on a theoretical incident light ray of the first ambient light sensor and a first plane, the first plane is a plane on which the first light source is located, the first plane is determined based on a second plane, the second plane is a plane on which the intelligent driving device is located, and the first plane is parallel to the second plane;
    determining a first offset vector based on the first location information and the fourth location information; and
    determining the second location information of the intelligent driving device based on the first offset vector and the third location information.

4.  The method according to claim 3, wherein the method further comprises:

    obtaining fifth location information of a second light source;
    determining a second ambient light sensor corresponding to the second light source, wherein the second ambient light sensor is in the ambient light sensor group;
    determining sixth location information of the second light source based on a pose of the second ambient light sensor in the world coordinate system, wherein the sixth location information is determined by a theoretical incident light ray of the second ambient light sensor and a third plane, the third plane is a plane on which the second light source is located, the third plane is determined based on the second plane, and the second plane is parallel to the third plane; and
    determining a second offset vector based on the fifth location information and the sixth location information; and
    the determining the second location information of the intelligent driving device based on the first offset vector and the third location information comprises:
    determining the second location information based on the first offset vector, the second offset vector, and the third location information.

5.  The method according to any one of claims 1 to 4, wherein the ambient light sensor group comprises a plurality of ambient light sensors, and a surface of each of the plurality of ambient light sensors is a smooth curved surface without a dent.

6.  The method according to any one of claims 1 to 5, wherein the ambient light sensor group comprises a solar panel, and the solar panel is distributed on the top of the intelligent driving device.

7.  A positioning apparatus, wherein the apparatus comprises an obtaining unit and a processing unit;

    the obtaining unit is configured to obtain first location information of a first light source; and
    the processing unit is configured to:

    determine a first ambient light sensor corresponding to the first light source, wherein the first ambient light sensor is in an ambient light sensor group, and the ambient light sensor group is installed on an intelligent driving device; and
    determine second location information of the intelligent driving device based on orientation information of the first ambient light sensor and the first location information.

8.  The apparatus according to claim 7, wherein

    the obtaining unit is further configured to obtain a light intensity value that is of each ambient light sensor in the ambient light sensor group and that corresponds to the first light source; and

the processing unit is configured to determine that an ambient light sensor with a largest light intensity value in the ambient light sensor group is the first ambient light sensor.

9. The apparatus according to claim 7 or 8, wherein the orientation information is a pose of the first ambient light sensor in a world coordinate system;

the obtaining unit is further configured to obtain third location information of the intelligent driving device, wherein the third location information is determined based on a global navigation satellite system; and
the processing unit is configured to:

determine fourth location information of the first light source based on the pose of the first ambient light sensor in the world coordinate system, wherein the fourth location information is determined based on a theoretical incident light ray of the first ambient light sensor and a first plane, the first plane is a plane on which the first light source is located, the first plane is determined based on a second plane, the second plane is a plane on which the intelligent driving device is located, and the first plane is parallel to the second plane;
determine a first offset vector based on the first location information and the fourth location information; and
determine the second location information of the intelligent driving device based on the first offset vector and the third location information.

10. The apparatus according to claim 9, wherein

the obtaining unit is further configured to obtain fifth location information of a second light source; and
the processing unit is further configured to:

determine a second ambient light sensor corresponding to the second light source, wherein the second ambient light sensor is in the ambient light sensor group;
determine sixth location information of the second light source based on a pose of the second ambient light sensor in the world coordinate system, wherein the sixth location information is determined by a theoretical incident light ray of the second ambient light sensor and a third plane, the third plane is a plane on which the second light source is located, the third plane is determined based on the second plane, and the second plane is parallel to the third plane;
determine a second offset vector based on the fifth location information and the sixth location information; and
determine the second location information based on the first offset vector, the second offset vector, and the third location information.

11. The apparatus according to any one of claims 7 to 10, wherein the ambient light sensor group comprises a plurality of ambient light sensors, and a surface of each of the plurality of ambient light sensors is a smooth curved surface without a dent.

12. The apparatus according to any one of claims 7 to 11, wherein the ambient light sensor group comprises a solar panel, and the solar panel is distributed on the top of the intelligent driving device.

13. A positioning apparatus, comprising a processor and a memory, wherein the processor is coupled to the memory, and is configured to read and execute instructions in the memory, to perform the method according to any one of claims 1 to 6.

14. A computer-readable medium, wherein the computer-readable medium stores program code, and when the computer program code is run on a computer, the computer is enabled to perform the method according to any one of claims 1 to 6.

15. A chip, comprising a circuit, wherein the circuit is configured to perform the method according to any one of claims 1 to 6.

16. An intelligent driving device, comprising: the positioning apparatus according to any one of claims 7 to 13 and an ambient light sensor group, wherein the ambient light sensor group comprises a plurality of ambient light sensors, and a surface of each of the plurality of ambient light sensors is a smooth curved surface without a dent.

Sensing system 120

Computing platform 130

| Processor 131 | Processor 132 | ... | Processor 13n |

Display apparatus 140

Intelligent driving device 100

FIG. 1

200

| Sensor abstraction module 210 | → | Sensing module 220 | → | Positioning module 230 | → | Planning control module 240 |

FIG. 2

300

S301: Obtain first location information of a first light source

S302: Determine a first ambient light sensor corresponding to the first light source, where the first ambient light sensor is in an ambient light sensor group

S303: Determine second location information of a vehicle based on orientation information of the first ambient light sensor and the first location information

FIG. 3

400

S401: Obtain a sensor parameter at a current moment

S402: Determine a sub-sensor V with a largest light intensity value

S403: Obtain a pose of the sensor V in a vehicle coordinate system

S404: Obtain a pose of the sensor V in a world coordinate system

S405: Obtain an offset vector from a light source to a vertically-incident light ray

S406: Move an initial positioning location by the offset vector to obtain an optimized positioning point

S407: Determine, based on an optimization result of the positioning point, whether iteration is required

FIG. 4

Light intensity sensor group

FIG. 5

(a)

(b)

(c)

FIG. 6

FIG. 7

FIG. 8

FIG. 9

FIG. 10

TO
FIG. 11(a)-2

FIG. 11(a)-1

FIG. 11(a)-2

EP 4 564 860 A1

FIG. 11(b)

FIG. 11(c)

TO
FIG. 11(d)-2

FIG. 11(d)-1

EP 4 564 860 A1

CONT.
FROM
1119    FIG. 11(d)-1

Positioning of the vehicle is optimized successfully.   | OK |   | Ignore (5s) |

5G

Precise positioning

Singer: xxx

**A x x x x x x x B**

Application

10%    260 km

360° surround view

25°C    24.5°C

FIG. 11(d)-2

Apparatus 1200

Obtaining unit 1210

Storage unit 1220

Processing unit 1230

FIG. 12

Apparatus 1300

Memory 1310

Processor 1320

Communication
interface 1330

FIG. 13

## INTERNATIONAL SEARCH REPORT

| International application No. |
|---|
| **PCT/CN2022/113626** |

| A. | CLASSIFICATION OF SUBJECT MATTER |
|---|---|
| | G01S 19/45(2010.01)i |

According to International Patent Classification (IPC) or to both national classification and IPC

| B. | FIELDS SEARCHED |
|---|---|

Minimum documentation searched (classification system followed by classification symbols)

G01S,G01C

Documentation searched other than minimum documentation to the extent that such documents are included in the fields searched

Electronic data base consulted during the international search (name of data base and, where practicable, search terms used)

CNPAT, WPI, EPODOC, CNKI: 华为技术有限公司, 车辆, 自动驾驶, 定位, 导航, 发光二极管, 可见光, 光源, 灯, 照明, 环境光, 位置, 光强, 强度, 角度, 方向, 坐标, vehicle, autonomous driving, positioning, navigation, light emitting diodes, LED, visible light, light sources, light+, ambient light, location, position, intensity, angle, direction, coordinates

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105242294 A (NINGBO UNIVERSITY) 13 January 2016 (2016-01-13) description, paragraphs 0004-0088, and figures 1-3 | 1-16 |
| A | CN 105246040 A (NINGBO UNIVERSITY) 13 January 2016 (2016-01-13) entire document | 1-16 |
| A | CN 112925000 A (SOUTHEAST UNIVERSITY) 08 June 2021 (2021-06-08) entire document | 1-16 |
| A | CN 111448591 A (BEIJING DIDI INFINITY TECHNOLOGY AND DEVELOPMENT CO., LTD.) 24 July 2020 (2020-07-24) entire document | 1-16 |
| A | CN 107907897 A (PINGTAN CHENGXIN ZHICHUANG TECHNOLOGY CO., LTD.) 13 April 2018 (2018-04-13) entire document | 1-16 |
| A | CN 111624551 A (NANJING XIAOZHUANG UNIVERSITY) 04 September 2020 (2020-09-04) entire document | 1-16 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2022** | **28 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/113626** |

### C. DOCUMENTS CONSIDERED TO BE RELEVANT

| Category* | Citation of document, with indication, where appropriate, of the relevant passages | Relevant to claim No. |
| --- | --- | --- |
| A | CN 106908779 A (ACADEMY OF OPTO-ELECTRONICS, CHINESE ACADEMY OF SCIENCES) 30 June 2017 (2017-06-30)<br>entire document | 1-16 |
| A | CN 111610484 A (JILIN UNIVERSITY) 01 September 2020 (2020-09-01)<br>entire document | 1-16 |
| A | US 2020183386 A1 (GM GLOBAL TECHNOLOGY OPERATIONS LLC) 11 June 2020 (2020-06-11)<br>entire document | 1-16 |

Form PCT/ISA/210 (second sheet) (January 2015)

### INTERNATIONAL SEARCH REPORT
### Information on patent family members

International application No.

**PCT/CN2022/113626**

| Patent document cited in search report | | | Publication date (day/month/year) | Patent family member(s) | | | Publication date (day/month/year) |
|---|---|---|---|---|---|---|---|
| CN | 105242294 | A | 13 January 2016 | None | | | |
| CN | 105246040 | A | 13 January 2016 | None | | | |
| CN | 112925000 | A | 08 June 2021 | None | | | |
| CN | 111448591 | A | 24 July 2020 | SG | 11201811415 S | A | 29 June 2020 |
| | | | | TW | 202019745 | A | 01 June 2020 |
| | | | | EP | 3746989 | A1 | 09 December 2020 |
| | | | | AU | 2018282304 | A1 | 04 June 2020 |
| | | | | JP | 2021508027 | A | 25 February 2021 |
| | | | | US | 2020159239 | A1 | 21 May 2020 |
| | | | | CA | 3028223 | A1 | 16 May 2020 |
| | | | | US | 2021157329 | A1 | 27 May 2021 |
| | | | | WO | 2020097912 | A1 | 22 May 2020 |
| CN | 107907897 | A | 13 April 2018 | None | | | |
| CN | 111624551 | A | 04 September 2020 | None | | | |
| CN | 106908779 | A | 30 June 2017 | None | | | |
| CN | 111610484 | A | 01 September 2020 | None | | | |
| US | 2020183386 | A1 | 11 June 2020 | None | | | |

Form PCT/ISA/210 (patent family annex) (January 2015)